# EUROPÄISCHE PATENTSCHRIFT

(11) **EP 0 359 942 B1**
(45) Veröffentlichungstag und Bekanntmachung des Hinweises auf die Patenterteilung: **28.09.1994**
(21) Anmeldenummer: 89113726.7
(22) Anmeldetag: 25.07.1989
(51) Int. Cl.: B01F 15/00, F16D 1/02, B01J 2/10, F16C 3/02

(54) **Maschine zum Behandeln schüttfähiger, pastöser und/oder fliessfähiger Güter mit eingebauter Aufschliessvorrichtung**
Machine for treating pourable, pasty and/or flowable material with incorporated preparating device
Machine pour le traitement des matériaux en vrac, pâteux et/ou coulants avec dispositif de préparation installé

(30) Priorität: 17.09.1988 DE 3831609
(43) Veröffentlichungstag der Anmeldung: 28.03.1990
(73) Patentinhaber: Gebr. Lödige Maschinenbau Gesellschaft mbH, D-33102 Paderborn (DE)
(72) Erfinder: Schmidt, Alfons, Dipl.-Ing., D-4795 Delbrück-Bentfeld (DE)
(74) Vertreter: Türk, Gille, Hrabal, Leifert

(56) Entgegenhaltungen:
- DE-A- 3 604 505
- FR-A- 2 279 972
- US-A- 4 363 603

## Beschreibung

Die Erfindung betrifft eine Maschine zum Behandeln schüttfähiger, pastöser und/oder fließfähiger Güter, die einen Behälter zur Aufnahme der Güter für die Behandlung derselben und wenigstens eine an der Wand des Behälters gelagerte Aufschließvorrichtung für das im Behälter befindliche zu behandelnde Gut aufweist. Die Aufschließvorrichtung hat eine durch eine öffnung in der Wand des Behälters ragende Welle, ein auf der Außenseite des Behälters der Maschine befestigtes Lager mit daran anzuschließendem Motor für den Antrieb der Welle und an dem in den Behälter ragenden Teil der drehbar gelagerten antreibbaren Welle Aufschließwerkzeuge für die in dem Behälter zu behandelnden Güter.

Die Erfindung betrifft alle Typen derartiger Maschinen, die eine Aufschließvorrichtung für die zu behandelnden Güter aufweisen, beispielsweise Mischmaschinen, Granuliermaschinen, Trockenmaschinen, Reaktoren aller Art und dergleichen. Der Behälter derartiger Maschinen kann beliebig ausgebildet und sowohl aufrechtstehend als auch liegend angeordnet sein.

Bei derartigen Maschinen ist es bekannt, Aufschließvorrichtungen allein oder zusätzlich zu Mischwerken derart einzubauen, daß der die Aufschließwerkzeuge wie Zerkleinerungswerkzeuge aufweisende Teil derartiger Vorrichtungen durch die Behälterwand, beispielsweise eines zylindrischen Behälters, dessen Längsachse sowohl horizontal als auch senkrecht verlaufen kann, in das Innere des Behälters hinragt, während die Lagerung und der Antrieb auf der Außenseite des Behälters an die Behälterwand angebaut sind. Derartige Aufschließvorrichtungen, von denen eine oder mehrere an einer Maschine vorgesehen sein können, müssen gelegentlich oder häufiger ausgebaut bzw. ausgewechselt werden, beispielsweise wenn man die Werkzeuge des Mischwerkes einer solchen Maschine für die Behandlung bestimmter Mischgüter austauscht oder wenn für das Aufschließen bzw. Zerkleinern der in der Maschine zu behandelnden Güter andere Aufschließ- oder Zerkleinerungswerkzeuge benötigt werden.

Zu diesem Zweck ist es bei bekannten Aufschließvorrichtungen bekannt, diese von der Außenseite des Behälters der Maschine abzubauen, wozu man zunächst alle für die Energiezufuhr erforderlichen Anschlüsse abklemmen, dann den Motor und schließlich die Lagerung mit der daran angeordneten Welle und den auf dieser angebrachten Aufschließwerkzeugen entfernen muß. Dies ist nicht nur arbeitsintensiv und zeitaufwendig, sondern erfordert auch eine verhältnismäßig große öffnung in der Behälterwand, die groß genug sein muß, um die Welle mit den darauf angeordneten Aufschließwerkzeugen hindurchziehen zu können. Danach müssen die Aufschließwerkzeuge von der Welle abgebaut und durch Werkzeuge anderer Gestalt und/oder Anordnung ersetzt werden, bevor man die betreffende Aufschließvorrichtung wieder einbauen kann. Während der gesamten Umrüstzeit kann die betreffende Aufschließvorrichtung und auch die mit dieser versehene Maschine nicht benutzt werden.

Um die beim Umrüsten der Aufschließvorrichtungen von Maschinen der eingangs genannten Gattung notwendigen Stillstandszeiten der Maschine deutlich zu verringern, ist es bekannt (DE-A-36 09 505), die Welle jeder Aufschließvorrichtung zweiteilig auszubilden und den in den Behälter der Maschine ragenden Teil der Welle von dem im Lager angeordneten Teil lösbar an diesem zu befestigen, Mit anderen Worten ausgedrückt ist es bekannt, die Aufschließvorrichtungen der Maschine so auszugestalten, daß der die Aufschließwerkzeuge tragende Teil von der Innenseite des Behälters aus eingebaut und ausgebaut werden kann, was in vielen Fällen keine räumlichen Probleme bereitet, weil bei aufrechtstehendem Behälter bzw. Behälter mit senkrecht verlaufender Achse das Innere des Behälters durch den verhältnismäßig großen Deckel leicht zugänglich ist, während bei zylindrischen oder trommelförmigen Behältern mit horizontaler Längsachse vielfach verhältnismäßig große Klappenverschlüsse für das Beschicken und/oder Entleeren einschließlich Reinigen vorgesehen sind, durch die eine Bedienungsperson ohne Schwierigkeiten das Innere des Behälters erreichen und darin arbeiten kann.

Zum Auswechseln der Aufschließwerkzeuge ist es nicht erforderlich, die Lagerung und den Antrieb der Welle der einzelnen Aufschließvorrichtungen ab- oder auszubauen, so daß das Aus- und Einbauen der Aufschließwerkzeuge ohne allzu großen Zeit- und Arbeitsaufwand ausgeführt werden kann. Das Umrüsten des die Aufschließwerkzeuge tragenden Teiles der Welle jeder Aufschließvorrichtung kann außerhalb der Maschine durchgeführt werden, ohne daß diese hierfür stillgesetzt werden müßte. Die durch das Umrüsten der Aufschließvorrichtungen bedingten Stillstandszeiten der Maschine sind daher auf die Zeiten beschränkt, welche man für das reine Ein- und Ausbauen des von der Lagerung der Welle lösbaren Wellenteiles benötigt. Zum Umrüsten der Aufschließvorrichtungen braucht man insbesondere nicht die Lagerung selbst mit dem daran angebrachten Motor und der Energieversorgung abzubauen, so daß auch eventuell vorgesehene Verkleidungen der Maschine oder sonstige außerhalb der Maschine vorgesehene Hindernisse für das Umrüsten nicht entfernt werden müssen.

Auch ist es möglich, für bestimmte Einsatzfälle die Aufschließvorrichtung ganz stillzulegen, indem man den in den Behälter der Maschine ragenden Teil der Aufschließvorrichtung abbaut und die in der Behälterwand verbleibende, verhältnismäßig kleine öffnung durch eine lösbar aufzusteckende Kappe abdeckt.

Es ist auch möglich, Maschinen mit in deren Behandlungsbehälter ragenden Aufschließvorrichtungen wie Zerkleinerungsvorrichtungen mit verhältnismäßig geringem Arbeits- und insbesondere Zeitaufwand bezüglich der Aufschließvorrichtungen umzurüsten, so daß die hierfür erforderlichen Stillstandszeiten der Maschine gegenüber vorbekannten Maschinen der vorliegenden Gattung bedeutend gesenkt werden können.

Bei der bekannten Maschine mit einem eine zweiteilige Welle aufweisenden Mischwerk (DE-A 36 04 505) sind die beiden Teile der Mischwerkswelle über eine Steckverbindung miteinander zu verbinden, die eine zylindrische Hülse aufweist, welche auf eine zylindrische Welle mit daran angebrachtem Wellenkiel aufzustecken ist, wobei der Wellenkeil zum Übertragen der Drehmomente dient. Der in eine entsprechende Nut der aufzusteckenden Hülse eingreifende Keil bildet eine Unwucht, so daß diese Steckverbindung nur bei langsam laufenden Mischwerken einsetzbar ist. Hinzu kommt, daß das Zusammenstecken der beiden Wellenteile verhältnismäßig langwierig ist und eine hohe Präzision erfordert, wenn man nicht ein größeres Spiel zwischen Keil und Nut hinnehmen will.

Der Erfindung liegt die Aufgabe zugrunde, bei Mischmaschinen mit eingebauten Aufschließvorrichtungen, welche eine zweiteilige Welle aufweisen, das Zusammenstecken und Lösen der beiden Wellenteile zu vereinfachen und eine drehsichere Verbindung der zusammenzusteckenden Wellenteile zu erzielen.

Diese Aufgabe wird mit einer Maschine gelöst, welche die Merkmale des Patentanspruches 1 aufweist. Vorteilhafte weitere Merkmale der Erfindung sind Gegenstand der Unteransprüche.

Gemäß der Erfindung ist eine drehfeste einfache Steckverbindung zwischen den beiden Wellenteilen der zweiteiligen Welle der Aufschließvorrichtung vorgesehen, die Drehmomente übertragen kann und dennoch schnell zusammenzufügen und auch zu lösen ist .

Bei Verwendung des als Bolzen ausgebildeten zentral angeordneten Spannelementes gemäß Anspruch 2 läßt sich die drehfeste Verbindung besonders sicher und schnell herstellen und auch wieder lösen.

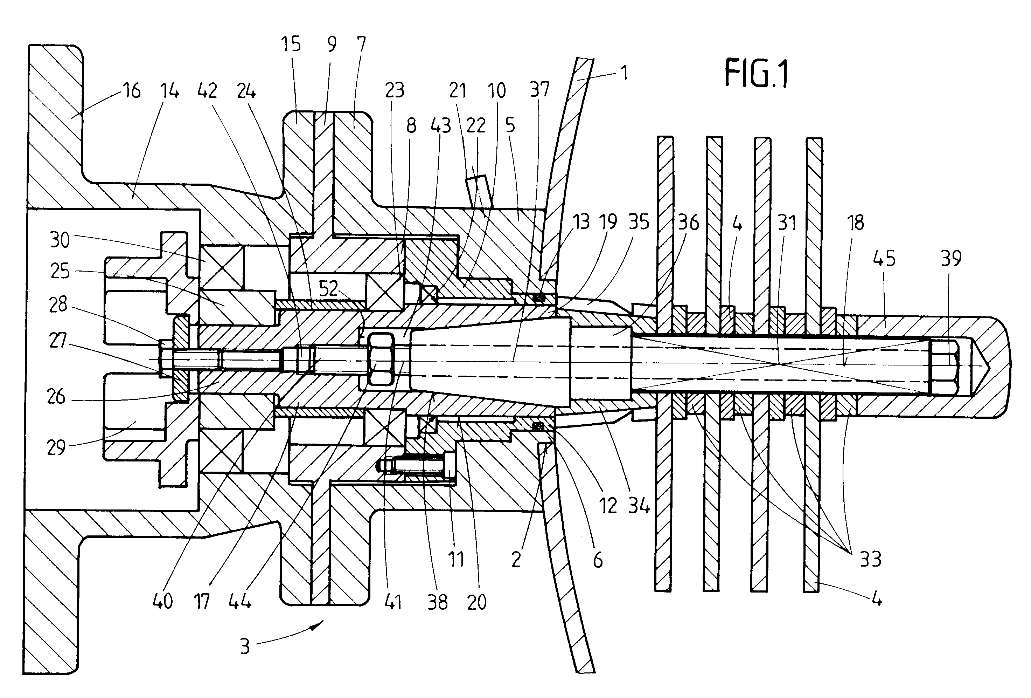

In der Zeichnung sind zwei Ausführungsbeispiele erfindungsgemäß ausgestatteter Maschinen zum Behandeln schüttfähiger, pastöser und/oder fließfähiger Güter dargestellt, und zwar zeigt
- Fig. 1: einen horizontalen Schnitt durch einen nur teilweise angedeuteten zylindrischen Behälter der Maschine und einer in diesen aufrechtstehenden bzw. mit senkrecht verlaufender Mittelachse angeordneten Behälter ragenden Aufschließvorrichtung, welche innerhalb des Behälters messerförmige Zerkleinerungswerkzeuge trägt,

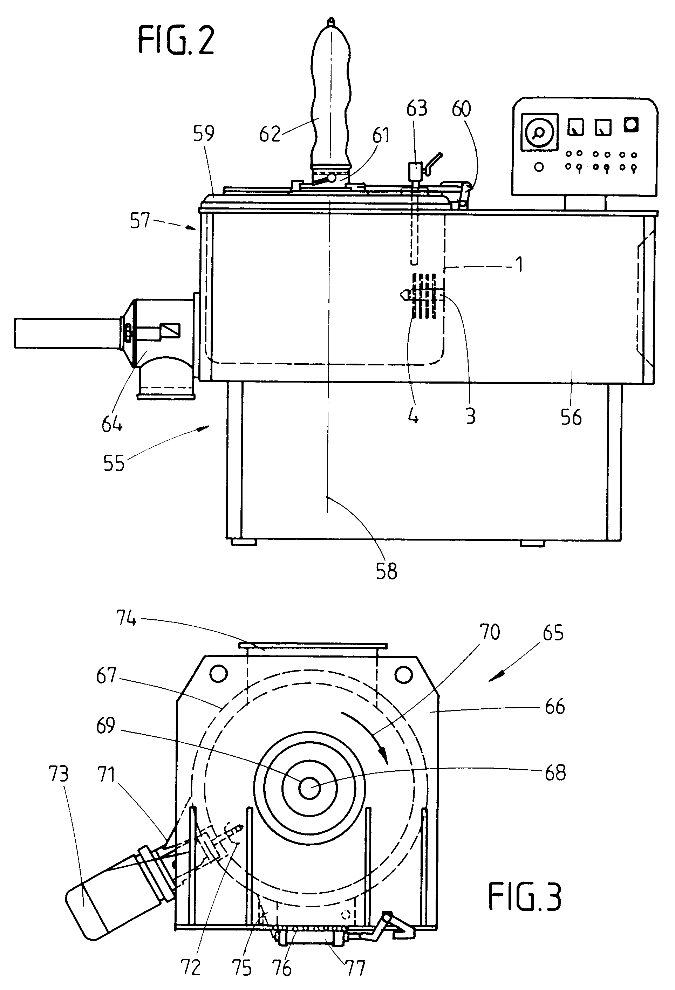

- Fig. 2: eine schematisch dargestellte Seitenansicht der Maschine aus Fig. 1, wobei die in den Behälter dieser Maschine eingebaute Aufschließvorrichtung angedeutet ist, und
- Fig. 3: eine Stirnansicht einer anderen Ausführungsform der Maschine, welche einen trommelförmigen Behälter mit horizontal verlaufender Längsachse aufweist, in den eine gegenüber Fig. 1 und 2 bezüglich der Zerkleinerungswerkzeuge abgewandelte, im übrigen aber erfindungsgemäß ausgestaltete Aufschließvorrichtung hineinragt.

Von einem Mischgranulator mit vertikal angeordnetem trommelförmigen Behälter ist in Fig. 1 nur ein Teil der senkrecht verlaufenden zylindrischen Seitenwand (1) zu erkennen. Diese Seitenwand (1) enthält eine kreisförmige öffnung (2) für die Montage einer Aufschließvorrichtung (3), die beim dargestellten Ausführungsbeispiel als Zerkleinerungsvorrichtung mit messerartigen Zerkleinerungswerkzeugen (4) ausgebildet ist.

Auf die Außenseite der Behälterwand (1) ist ein Lagergehäuse (5) aufgesetzt, das mit einem kragenförmigen Ansatz (6) in die öffnung (2) ragt und diese vollständig ausfüllt. Das Lagergehäuse (5) ist auf der Außenseite der Behälterwand (1) befestigt, beispielsweise an die Wand angeschweißt. Am der Wand (1) abgewandten Ende ist das Lagergehäuse (5) mit einem radial nach außen vorstehenden Flansch (7) versehen, der zum Befestigen weiterer Teile des Lagers dient, wie nachstehend im einzelnen erläutert ist.

Am Flansch (7) ist eine im Gehäuse (5) untergebrachte zylindrische Lagerbüchse (8) mittels eines radial vorstehenden Flansches (9) befestigt, an dessen zur Behälterwand (1) weisenden Ende eine zylindrische Büchse (10) mittels Schrauben (11) angebracht ist. Diese Büchse ragt mit ihrem äußeren, halsförmigen Ende (12) in den Ansatz (6) des Lagergehäuses (5) und endet bündig mit dem äußeren Ende dieses Ansatzes an der Innenseite der Behälterwand (1). Ein Dichtungsring (13) sorgt für eine Abdichtung zur Innenwand des Ansatzes (6) des Lagergehäuses (5).

An das entgegengesetzte Ende der Lagerbüchse (8) ist ein weiteres Lagergehäuse (14) mittels eines radialen Flansches (15) angebaut. Die Flansche (7, 9 und 15) sind mittels nicht dargestellter Schrauben aneinander befestigt. Am entgegengesetzenden Ende ist das Lagergehäuse (14) mit einem weiteren Flansch (16) versehen, der zum Anschließen eines in Fig. 1 nicht dargestellten Motors dient.

Die Aufschließvorrichtung (3) ist mit einer zweiteiligen Welle ausgestattet, wobei der hülsenförmig ausgebildete Wellenteil (17) auf der Außenseite der ßehälterwand (1) angeordnet ist, während der als Steckteil ausgebildete andere Wellenteil (18) sich im wesentlichen auf der Innenseite der Behälterwand (1) und damit innerhalb des trommelförmigen Behälters befindet.

Der hülsenförmige Wellenteil (17) ragt mit seinem vorderen Ende (19) in das vordere Ende (12) der Büchse (10) und schließt mit diesem Ende und dem Ende des Ansatzes (6) des Lagergehäuses (5) bündig ab. Zwischen der Außenseite des Wellenteiles (17) und der Innenwand der Büchse (10) befindet sich ein ringförmiger Raum (20), der sich zum Inneren des Behälters zu einem Ringspalt verjüngt, durch welchen Luft ausgeblasen werden kann, die unter Druck durch einen Schlauch (21) zugeführt wird, um zu verhindern, daß durch den engen Ringspalt Teile des im Behälter der Maschine verarbeiteten Gutes in das Lager eindringen können. Am entgegengesetzten Ende des Ringraumes (20) befindet sich eine Wellendichtung (22), die auf der Außenseite des einen Wellenteiles (17) aufliegt und verhindert, daß unter Druck stehende Luft in der entgegengesetzten Richtung ausgeblasen werden kann.

Auf dem hülsenförmigen Wellenteil (17) ist ein Kugellager (23) angeordnet, dessen äußerer Laufring zwischen der Lagerbüchse (8) und der Büchse (10) festgelegt ist, während der innere Laufring an einer Schulter des Wellenteiles (17) anliegt und von einer Distanzhülse (24) gegen diese Schulter gedrückt ist. Die Distanzhülse ist von einer Büchse (25) festgespannt, die auf einem im Durchmesser kleineren Ansatz (26) des Wellenteiles (17) steckt und von einer in die Verlängerung (26) eingeschraubten und auf eine Scheibe (27) wirkenden Sechskantschraube (28) unter Druck gesetzt ist. Auf der Außenseite ist von der Scheibe (27) und der Sechskantschraube (28) eine Kupplungshälfte (29) befestigt, die Teil einer Kupplung zu dem Motor ist.

Auf der Büchse (25) ist ein weiteres Kugellager (30) als zweites Lager für den Wellenteil (17) angeordnet, das in das Lagergehäuse (14) mit axialem Spiel eingepaßt ist.

Der lösbare Wellenteil (18) hat einen im Querschnitt polygonal ausgebildeten Abschnitt (31), auf den die messerförmigen Zerkleinerungswerkzeuge (4) mit entsprechend gestalteten zentralen öffnungen um jeweils 90° gegeneinander versetzt aufgesteckt sind. Distanzringe (33) sorgen für die richtige gegenseitige Anordnung und den gewünschten Abstand zwischen den Schneidwerkzeugen, von denen in der Zeichnung insgesamt vier Paare dargestellt sind. Zwischen dem der Behälterwand (1) am nächsten liegenden Werkzeug (4) und der Behälterwand ist eine Abstandsbüchse (34) angeordnet, die sich auf dem äußeren Ende (19) des anderen Wellenteiles (17) abstützt. Nach außen vorstehende flügelartige Ansätze (35), die in geringem Abstand von der Innenseite der Behälterwand (1) enden, sorgen dafür, daß im Bereich der Lagerung im Behälter befindliches Gut weggeschleudert wird, damit sich am Wellendurchgang keine Materialablagerungen bilden können.

Der Wellenteil (18) weist innerhalb der Abstandsbüchse (34) einen zylindrischen Abschnitt (36) auf, an den sich ein kegelstumpfförmiger oder konischer Abschnitt (37) anschließt. Dieser Abschnitt (37) paßt in eine entsprechend konisch ausgebildete zentrale Bohrung (38) des hülsenförmig ausgebildeten anderen Wellenteiles (17), wobei die Konuswinkel des Abschnittes (37) und der Bohrung (38) so gewählt sind, daß sich die Verbindung zwischen dem eingesteckten konusförmigen Abschnitt (37) und dem hülsenförmigen Wellenteil (17) nicht von selbst lösen kann. Vielmehr ist eine selbsthemmende drehfeste Verbindung der zusammengesteckten Wellenteile (17 ) und (18) gewährleistet.

Zum Lösen der Verbindung zwischen den beiden Wellenteilen (17) und (18) ist der Wellenteil (18) mit einer zentralen, ihn auf seiner gesamten Länge durchsetzenden Bohrung versehen, in der eine Bolzenschraube (39) mit Sechskantkopf steckt. Diese Bolzenschraube (39) ist mit dem äußeren Ende (40) ihres Gewindebolzens (41) in eine Gewindebohrung (42) eingeschraubt, die vom inneren Ende der im Wellenteil (17) befindlichen Bohrung (38) ausgeht. Auf dem Gewindebolzen (41) befindet sich zwischen dem konischen Abschnitt (37) des Wellenteiles (18) und dem Boden (52) einer zylindrischen Verlängerung (43) der zunächst konischen Bohrung (38) eine Mutter (44), die drehfest mit dem Gewindebolzen (41) verbunden ist, beispielsweise mittels eines Splintes oder einer Klemmschraube.

Eine kappenförmige überwurfmutter (45) ist über das äußere Ende des Wellenteiles (18) und den Kopf der Bolzenschraube (39) gestülpt und hält die auf dem Wellenteil (18) angeordneten Teile der Aufschließvorrichtung (3) unter Druck zusammen.

Zum Lösen des Wellenteiles (18) vom Wellenteil (17) und damit zum Ausbauen der Zerkleinerungswerkzeuge (4) wird zunächst die überwurfmutter (45) entfernt, woraufhin man ein Drehwerkzeug am Kopf der Bolzenschraube (39) ansetzen und mit diesem die Bolzenschraube (39) aus dem Gewindeloch (42) herausdrehen kann. Die Mutter (44) nähert sich dadurch dem äußeren Ende des konischen Abschnittes (37) des Wellenteiles (18). Sobald die Mutter (44) zur Anlage an dem äußeren Ende des konischen Abschnittes (37) kommt, drückt sie beim Weiterdrehen der Bolzenschraube (39) gegen dieses Ende, wodurch der konische Abschnitt (37) aus der konischen Bohrung (38) gelöst wird. Ist die Bolzenschraube (39) ganz aus der Gewindebohrung (42) herausgeschraubt, kann man den im Inneren des Behälters befindlichen Teil der Aufschließvorrichtung (3) herausnehmen.

Bei der Montage dieses Teiles der Aufschließvorrichtung (3) drückt der Kopf der Bolzenschraube (39) auf das entgegengesetzte Stirnende des Wellenteiles (18) und bringt schließlich den konischen Abschnitt (37) Wellenteiles (18) in reibungsschlüssigen Eingriff mit der konischen Seitenwand der Bohrung (38), wenn die Bolzenschraube (39) tief genug in die Gewindebohrung (42) eingeschraubt worden ist. Die Mutter (44) behindert diesen Vorgang nicht.

In Fig. 2 ist der in Fig. 1 nur angedeutete Mischgranulator (55) in einer vollständigen Seitenansicht dargestellt. In einem Gestell (56) ist ein im Grundriß zylindrischer trogförmiger Behälter (57) mit senkrecht verlaufender Mittelachse (58) angeordnet, dessen oberes Ende durch einen Deckel (59) verschlossen ist, der um ein Scharnier (60) schwenkbar aufgeklappt werden kann. Im Zentrum des Deckels (59) befindet sich ein hochstehender Stutzen (61) mit daran angeordnetem sackförmigen Staubfänger (62) als Entlüftung.

Aus Fig. 2 ist erkennbar, daß in der Seitenwand (1) des Behälters (57) eine Aufschließvorrichtung (3) der in Fig. 1 im einzelnen gezeigten Art gelagert ist. Es können auch mehrere derartige Aufschließvorrichtungen vorgesehen sein.

Durch ein Rohrsystem (63) kann eine Flüssigkeit in den Bereich der messerförmigen Zerkleinerungswerkzeuge (4) der Aufschließvorrichtung (3) herangeführt werden.

Der Behälter (57) läßt sich beispielsweise durch ein hier nicht näher beschriebenes Entleerungssystem (64) entleeren, jedoch ist auch eine Entleerung durch das mittels des Deckels (59) verschließbare obere Ende möglich. Zum Ein- und Ausbauen des die Zerkleinerungswerkzeuge (4) aufweisenden Teiles der Aufschließvorrichtung (3) wird der Deckel (59) aufgeklappt.

Im Behälter (57) können weitere Werkzeuge angeordnet sein, die um die senkrechte Achse (58) drehbar gelagert sind und eine solche Gestalt und Umlaufbahn aufweisen, daß sie mit den Zerkleinerungswerkzeugen (4) der Aufschließvorrichtungen (3) nicht kollidieren.

Die in Fig. 3 dargestellte Mischmaschine (65) weist zwischen senkrecht verlaufenden Stirnwänden (66) einen zylinderförmigen bzw. trommelförmigen Mischbehälter (67) mit horizontal verlaufender Mittelachse (68) auf. Auf einer entlang dieser Mittelachse (68) sich erstreckenden Welle (69) sind hier nicht dargestellte Mischwerkzeuge befestigt, welche in Richtung eines Pfeiles (70) im Behälter (67) umlaufen können.

An der zylindrischen Wand des Behälters (67) sind Aufschließvorrichtungen (71) befestigt, von denen in Fig. 3 nur eine gezeigt ist. Diese Aufschließvorrichtungen (71) entsprechen weitgehend der Aufschließvorrichtung gemäß Fig. 1, jedoch sind bei dieser Ausführungsform die Zerkleinerungswerkzeuge (72) kelchförmig ausgebildet. Auch ist nur ein Paar von Zerkleinerungswerkzeugen in praktisch einer Ebene vorgesehen.

In Fig. 3 ist der Antriebsmotor (73) für die Aufschließvorrichtung (71) gezeigt. Es ist erkennbar, daß es sehr viel einfacher und weniger aufwendig ist, wenn zum Auswechseln der Zerkleinerungswerkzeuge (72) nur der in den Behälter (67) ragende Teil der Aufschließvorrichtung (71) abgebaut werden muß und der übrige Teil dieser Vorrichtung einschließlich dem Antriebsmotor (73) am Behälter (67) verbleiben kann.

Der zylindrische bzw. trommelförmige Behälter (67) weist auf seiner Oberseite einen domartigen Einfüllstutzen (74) auf, der in nicht dargestellter Weise verschlossen werden kann. Im unteren Bereich des trommelförmigen Behälters (67) befindet sich ein Auslaßstutzen (75) mit verschließbarer Bodenklappe (76), die mittels eines pneumatischen oder hydraulischen Zylinders (77) betätigt werden kann.

Der Ein- und Ausbau des die Zerkleinerungswerkzeuge (72) aufweisenden Teiles der Aufschließvorrichtung (71) kann sowohl durch den Dom als auch durch die Bodenöffnung erfolgen. Auch kann der Behälter (67) in seiner zylindrischen Wand zusätzlich seitliche öffnungen enthalten, durch welche der die Zerkleinerungswerkzeuge (72) enthaltende Teil der Aufschließvorrichtung (71) zugänglich ist. Diese mittels einer Klappe verschließbare öffnungen sind in Fig. 3 nicht dargestellt.

## Patentansprüche

1. Maschine zum Behandeln schüttfähiger, pastöser und/oder fließfähiger Güter, mit einem Behälter (57; 67) zur Aufnahme der Güter für die Behandlung und mit wenigstens einer an der Wand (1) des Behälters gelagerten Aufschließvorrichtung (3; 71) für das im Behälter befindliche zu behandelnde Gut, wobei die Aufschließvorrichtung eine durch eine Öffnung (2) in der Wand des Behälters ragende zweiteilige Welle, ein auf der Außenseite des Behälters befestigtes Lager (5) mit daran anzuschließendem Motor (73) für den Antrieb der drehbar gelagerten Welle und an dem in den Behälter ragenden Teil (18) der Welle Aufschließwerkzeuge (4; 72) für die zu behandelnden Güter aufweist und der in den Behälter ragende Wellenteil (18) von dem im Lager (5) angeordneten Wellenteil (17) lösbar mittels einer Steckverbindung an diesem zu befestigen ist,
**dadurch gekennzeichnet,**
daß die beiden Teile (17, 18) der Welle über eine konische Steckverbindung aus einem konischen Abschnitt (37) und einer konischen Bohrung (38), deren Konuswinkel so gewählt ist, daß eine selbsthemmende drehfeste reibungsschlüssige Verbindung gewährleistet ist, lösbar miteinander verbunden sind.

2. Maschine nach Anspruch 1, dadurch gekennzeichnet, daß die beiden Teile (17, 18) der Welle mit einer sie axial durchsetzenden Bohrung versehen sind und ein Bolzen (39, 41) vorgesehen ist, das in der Bohrung den einen gegen den anderen Wellenteil (17, 18) drehfest verspannend angeordnet ist.

3. Maschine nach Anspruch 2, dadurch gekennzeichnet, daß auf dem Bolzen (39, 41) zwischen dem einen und anderen Teil (17, 18) der Welle mit Spiel ein Mitnehmer-Anschlag (44) angeordnet ist.

## Claims

1. A machine for treating pourable, pasty and/or flowable material, with a container (57; 67) for reception of the material to be treated and at least one processing device (3; 71) for the material to be treated in the container mounted on the wall (1) of the container, wherein the processing device comprises a two-part shaft projecting through an opening (2) in the wall of the container, a bearing (5) fixed on the outside of the container, with a motor attached thereto for driving the rotatably mounted shaft and processing tools (4; 72) for the material to be treated on the part (18) of the shaft projecting into the container, and wherein the shaft part (18) projecting into the container is releasably attached to the shaft part (17) arranged in the bearing (5) by means of a plug-in connector, characterized in that the two parts (17, 18) of the shaft are releasably connected together by means of a conical plug-in connector with a conical section (37) and a conical bore (38), whose cone angle is so selected that a self-locking, frictionally engaged connection fast against rotation is ensured.

2. A machine according to claim 1, characterized in that the two parts (17, 18) of the shaft are provided with an axial bore extending therethrough and a bolt (39, 41) is provided, which is arranged in the bore to tighten the one shaft part fast against rotation against the other shaft part (17, 18).

3. A machine according to claim 2, characterized in that an entraining abutment (44) is arranged with play on the bolt (39, 41) between the one and the other part (17, 18) of the shaft.

## Revendications

1. Machine pour le traitement de matières boulantes, pâteuses et/ou fluides, comprenant un récipient (57 ; 67) destiné à recevoir les matières pour assurer leur traitement, et au moins un appareil désagrégateur (3; 71) monté sur la paroi (1) du récipient, destiné à agir sur la matière à traiter qui se trouve dans le récipient, machine dans laquelle l'appareil désagrégateur comprend un arbre en deux parties qui fait saillie à travers une ouverture (2) pratiquée dans la paroi du récipient, un palier (5) fixé au côté extérieur du récipient, muni d'un moteur (73) qui s'y raccorde, pour l'entraînement de l'arbre monté rotatif, et des outils désagrégateurs (4 ; 72) pour les matières à traiter fixés à la partie (18) de l'arbre, qui fait saillie dans le récipient, et la partie (18) de l'arbre qui fait saillie dans le récipient doit être fixée au moyen d'un accouplement à emmanchement d'une façon qui permet de la séparer de la partie (17) de l'arbre montée dans le palier (5),
caractérisée en ce que les deux parties (17, 18) de l'arbre sont assemblées l'une à l'autre de façon démontable à l'aide d'une liaison à emmanchement conique composée d'un segment conique (37) et d'un perçage conique (38) dont l'angle de cône est choisi de manière à assurer une liaison bloquée en rotation, opérant par friction et auto-bloquante.

2. Machine selon la revendication 1, caractérisée en ce que les deux parties (17, 18) de l'arbre sont munies d'un perçage qui les traverse axialement et il est prévu une vis (39, 41) qui est disposée dans le perçage et serre l'une des parties (17, 18) de l'arbre contre l'autre pour les bloquer en rotation.

3. Machine selon la revendication 2, caractérisée en ce qu'une butée d'entraînement (44) est montée sur la vis (39, 41) entre l'une et l'autre des parties (17, 18) de l'arbre, avec jeu.
